# EUROPEAN PATENT APPLICATION

(11) **EP 2 271 060 A2**
(43) Date of publication of application: **05.01.2011**
(21) Application number: 10006491.4
(22) Date of filing: 22.06.2010
(51) Int. Cl.: H04M 1/02, H04M 1/23

(54) **Mobile terminal**

(30) Priority: 01.07.2009 KR 20090059932
(71) Applicant: LG ELECTRONICS INC., Yeongdeungpo-gu Seoul 150-721 (KR)
(72) Inventor: Cha, Yongduk, Goyang Gyeonggi-Do (KR); Han, Dongyoup, Dongan-Gu Anyang Gyeonggi-Do (KR)
(74) Representative: Urner, Peter

(57) **Abstract**

A mobile terminal includes a main body (200) having a first display (151) and first and second sliders (300, 400) coupled to the main body (200), each of which includes first and second user interfaces. The first user interface is at least partially covered by the main body (200) when the first slider (300) is in a first position and exposed to view when the first slider (300) is in a second position, and the second user interface is at least partially covered by the main body (200) when the second slider (400) is in the first position and exposed to view when the first slider (300) is in the second position. The first and second user interfaces may include additional displays (301, 401).

## Description

### BACKGROUND

### 1. Field

One or more embodiments described herein relate to mobile terminals.

### 2. Background

Electronic terminals may be classified into two types: mobile terminals and stationary terminals. Furthermore, mobile terminals can be classified into two types: handheld terminals and vehicle-mounted terminals. The growing trend is to have these terminals become more multifunctional, e.g., capable of capturing still or moving images, playing music or video files, playing games, receiving broadcasts and the like.

In order to implement these functions, improvements in structural and/or software support will be required. Also, in order to appeal to the individual user, various designs have been developed including but not limited to bar-type, slide-type, folder-type, and swivel-type terminals as well as others. However, more terminal types and structures will be required in order to keep up with consumer demand and preferences., both in terms of appearance and functionality.

### BRIEF DESCRIPTION OF THE DRAWINGS

FIG. 1 is a block diagram of one embodiment of a mobile terminal;

FIGS. 2A and 2B are diagrams showing a front view of the terminal of FIG. 1, and FIG. 2C is a diagram showing a rear view of this terminal;

FIG. 3 is a diagram of an exploded view of the terminal of FIG. 1;

FIG. 4 is a diagram showing another possible view of the terminal oriented in the horizontal direction;

FIG. 5 is a diagram showing one possible cross-sectional view of terminal taken in a vertical direction;

FIG. 6 is an exploded view of one possible configuration of the terminal implemented as a slide module;

FIGS. 7A and 7B are diagrams of operating states of the slide module;

FIG. 8 is a diagram of an operating state of the closed terminal; and

FIGS. 9 through 12 are diagrams showing different possible operating states of the terminal in an open position.

### DETAILED DESCRIPTION

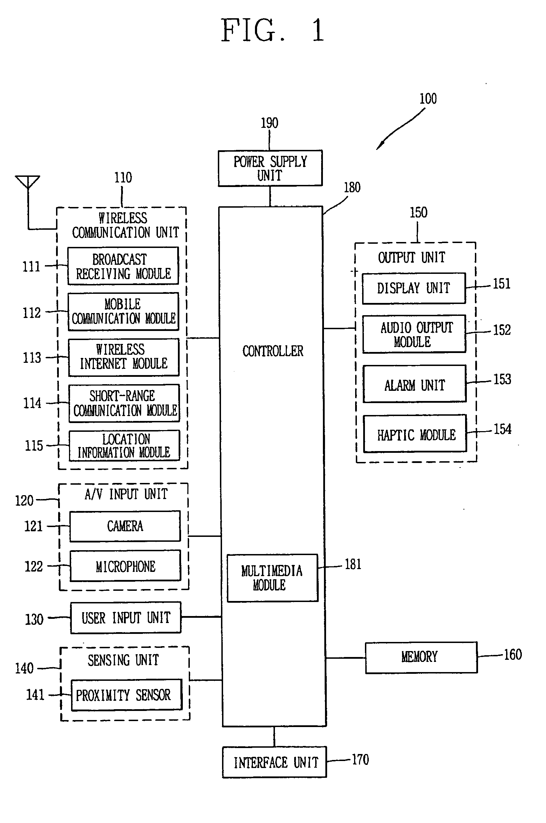

FIG. 1 is a block diagram of one embodiment of a mobile terminal which includes a wireless communication unit 110, an Audio/Video (A/V) input unit 120, a user input unit 130, a sensing unit 140, an output unit 150, a memory 160, an interface unit 170, a controller 180, a power supply unit 190, and the like. However, the constituent elements as illustrated in FIG. 1 are not necessarily required, and the mobile terminal may be implemented with greater or less number of elements than those illustrated elements.

Hereinafter, the constituent elements will be described in sequence.

The wireless communication unit 110 typically includes one or more elements allowing radio communication between the mobile terminal 100 and a wireless communication system, or allowing radio communication between radio communication the mobile terminal 100 and a network in which the mobile terminal 100 is located. For example, the wireless communication unit 110 may include a broadcast receiving module 111, a mobile communication module 112, a wireless Internet module 113, a short-range communication module 114, a location information module 115, and the like.

The broadcast receiving module 111 receives broadcast signals and/or broadcast associated information from an external broadcast management server through a broadcast channel.

The broadcast channel may include a satellite channel and/or a terrestrial channel. The broadcast management server may mean a server that generates and transmits a broadcast signal and/or broadcast associated information or a server that receives a previously generated broadcast signal and/or broadcast associated information and transmits to the mobile terminal 100. The broadcast signal may include a TV broadcast signal, a radio broadcast signal and a data broadcast signal as well as a broadcast signal in a form that a data broadcast signal is coupled to the TV or radio broadcast signal.

The broadcast associated information may mean information regarding a broadcast channel, a broadcast program, a broadcast service provider, and the like. The broadcast associated information may also be provided through a mobile communication network, and in this case, the broadcast associated information may be received by the mobile communication module 112.

The broadcast associated information may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may receive a broadcast signal using various types of broadcast systems. In particular, the broadcast receiving module 111 may receive a digital broadcast signal using a digital broadcast system such as digital multimedia broadcasting-terrestrial (DMB-T), digital multimedia broadcasting-satellite (DMB-S), media forward link only (VlediaFLO), digital video broadcast-handheld (DVB-H), integrated services digital broadcast-terrestrial (ISDB-T), and the like. The broadcast receiving module 111 is, of course, configured to be suitable for every broadcast system that provides a broadcast signal as well as the above-mentioned digital broadcast systems.

The broadcast signal and/or broadcast-associated information received through the broadcast receiving module 111 may be stored in the memory 160.

The mobile communication module 112 transmits and/or receives a radio signal to and/or from at least one of a base station, an external terminal and a server over a mobile communication network. Here, the radio signal may include a voice call signal, a video call signal and/or various types of data according to text and/or multimedia message transmission and/or reception.

The wireless Internet module 113 means a module for supporting wireless Internet access. The wireless Internet module 113 may be built-in or externally installed to the mobile terminal 100. Here, it may be used a wireless Internet access technique including a WLAN (Wireless LAN), Wi-Fi, Wibro (Wireless Broadband), Wimax (World Interoperability for Microwave Access), HSDPA (High Speed Downlink Packet Access), and the like.

The short-range communication module 114 is a module for supporting a short-range communication. Here, it may be used a short-range communication technology including Bluetooth, Radio Frequency IDentification (RFID), Infrared Data Association (IrDA), Ultra WideBand (UWB), ZigBee, and the like.

The location information module 115 is a module for checking or acquiring a location of the mobile terminal, and there is a GPS module as a representative example.

Referring to FIG. 1, the A/V(audio/video) input unit 120 receives an audio or video signal, and the A/V (audio/video) input unit 120 may include a camera 121 and a microphone 122. The camera 121 processes a image frame, such as still picture or video, obtained by an image sensor in a video phone call or image capturing mode. The processed image frame may be displayed on a display unit 151.

The image frames processed by the camera 121 may be stored in the memory 160 or transmitted to an external device through the wireless communication unit 110. Two or more cameras 121 may be provided according to the use environment of the mobile terminal.

The microphone 122 receives an external audio signal through a microphone in a phone call mode, a recording mode, a voice recognition mode, and the like, and processes the audio signal into electrical voice data. The processed voice data may be converted and outputted into a format that is transmittable to a mobile communication base station through the mobile communication module 112 in the phone call mode. The microphone 122 may implement various types of noise canceling algorithms to cancel noise generated in a procedure of receiving the external audio signal.

The user input unit 130 may generate input data to control an operation of the terminal. The user input unit 130 may be configured by including a keypad, a dome switch, a touch pad (pressure/capacitance), a jog wheel, a jog switch, and the like.

The sensing unit 140 detects a current status of the mobile terminal 100 such as an opened or closed state of the mobile terminal 100, a location of the mobile terminal 100, an orientation of the mobile terminal 100, and the like, and generates a sensing signal for controlling the operation of the mobile terminal 100. For example, when the mobile terminal 100 is a slide phone type, it may sense an opened or closed state of the slide phone.

Furthermore, the sensing unit 140 takes charge of a sensing function associated with whether or not power is supplied from the power supply unit 190, or whether or not an external device is coupled to the interface unit 170. On the other hand, the sensing unit 140 may include a proximity sensor 141.

The output unit 150 is configured to provide an output for audio signal, video signal, or alarm signal, and the output unit 150 may include the display unit 151, an audio output module 152, an alarm unit 153, a haptic module 154, and the like.

The display unit 151 may display(output) information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display.

Some of those displays may be configured with a transparent or optical transparent type to allow viewing of the exterior through the display unit, which may be called transparent displays. An example of the typical transparent displays may include a transparent LCD (TOLED), and the like. Under this configuration, a user can view an object positioned at a rear side of a terminal body through a region occupied by the display unit 151 of the terminal body.

The display unit 151 may be implemented in two or more in number according to a configured aspect of the portable terminal 100. For instance, a plurality of the display units 151 may be arranged on one surface to be spaced apart from or integrated with each other, or may be arranged on different surfaces.

Here, if the display unit 151 and a touch sensitive sensor (referred to as a touch sensor) have a layered structure therebetween, the structure may be referred to as a touch screen. The display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When touch inputs are sensed by the touch sensors, corresponding signals are transmitted to a touch controller (not shown). The touch controller processes the received signals, and then transmits corresponding data to the controller 180. Accordingly, the controller 180 may sense which region of the display unit 151 has been touched.

Referring to FIG. 1, a proximity sensor 141 may be arranged at an inner region of the portable terminal 100 covered by the touch screen, or near the touch screen. The proximity sensor indicates a sensor to sense presence or absence of an object approaching to a surface to be sensed, or an object disposed near a surface to be sensed, by using an electromagnetic field or infrared rays without a mechanical contact. The proximity sensor has a longer lifespan and a more enhanced utility than a contact sensor.

The proximity sensor may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of convenience of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may output audio data received from the wireless communication unit 110 or stored in the memory 160, in a call-receiving mode, a call-placing mode, a recording mode, a voice recognition mode, a broadcast reception mode, and so on. The audio output module 152 may output audio signals relating to functions performed in the portable terminal 100, e.g., sound alarming a call received or a message received, and so on. The audio output module 152 may include a receiver, a speaker, a buzzer, and so on.

The alarm 153 outputs signals notifying occurrence of events from the portable terminal 100. The events occurring from the portable terminal 100 may include call received, message received, key signal input, touch input, and so on. The alarm 153 may output not only video or audio signals, but also other types of signals such as signals notifying occurrence of events in a vibration manner. Since the video or audio signals can be output through the display unit 151 or the audio output unit 152, the display unit 151 and the audio output module 152 may be categorized into a part of the alarm 153.

The haptic module 154 generates various tactile effects which a user can feel. A representative example of the tactile effects generated by the haptic module 154 includes vibration. Vibration generated by the haptic module 154 may have a controllable intensity, a controllable pattern, and so on. For instance, different vibration may be output in a synthesized manner or in a sequential manner.

The haptic module 154 may generate various tactile effects, including not only vibration, but also arrangement of pins vertically moving with respect to a skin being touched (contacted), air injection force or air suction force through an injection hole or a suction hole, touch by a skin surface, presence or absence of contact with an electrode, effects by stimulus such as an electrostatic force, reproduction of cold or hot feeling using a heat absorbing device or a heat emitting device, and the like.

The haptic module 154 may be configured to transmit tactile effects (signals) through a user's direct contact, or a user's muscular sense using a finger or a hand. The haptic module 154 may be implemented in two or more in number according to the configuration of the portable terminal 100.

The memory 160 may store a program for the processing and control of the controller 180. Alternatively, the memory 160 may temporarily store input/output data (e.g., phonebook data, messages, still images, video and the like). Also, the memory 160 may store data related to various patterns of vibrations and audio output upon the touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the portable terminal with external devices. The interface unit 170 may allow a data reception from an external device, a power delivery to each component in the portable terminal 100, or a data transmission from the portable terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the portable terminal 100, which may include a User Identity Module (VIM), a Subscriber Identity Module (SIM), and the like. Also, the device having the identification module (hereinafter, referred to as 'identification device) may be implemented in a type of smart card. Hence, the identification device can be coupled to the portable terminal 100 via a port.

Also, the interface unit may serve as a path for power to be supplied from an external cradle to the portable terminal 100 when the portable terminal 100 is connected to the external cradle or as a path for transferring various command signals inputted from the cradle by a user to the portable terminal 100. Such various command signals or power inputted from the cradle may operate as signals for recognizing that the portable terminal 100 has accurately been mounted to the cradle.

The controller 180 typically controls the overall operations of the portable terminal 100. For example, the controller 180 performs the control and processing associated with telephony calls, data communications, video calls, and the like. The controller 180 may include a multimedia module 181 which provides multimedia playback. The multimedia module 181 may be configured as part of the controller 180 or as a separate component.

The controller 180 can perform a pattern recognition processing so as to recognize writing or drawing input on the touch screen as text or image.

The power supply unit 190 provides power required by various components under the control of the controller 180. The provided power may be internal power, external power, or combination thereof.

Various embodiments described herein may be implemented in a computer-readable medium using, for example, software, hardware, or some combination thereof.

For a hardware implementation, the embodiments described herein may be implemented within one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, micro processors, other electronic units designed to perform the functions described herein, or a selective combination thereof. In some cases, such embodiments are implemented by the controller 180.

For software implementation, the embodiments such as procedures and functions may be implemented together with separate software modules each of which performs at least one of functions and operations. The software codes can be implemented with a software application written in any suitable programming language. Also, the software codes may be stored in the memory 160 and executed by the controller 180.

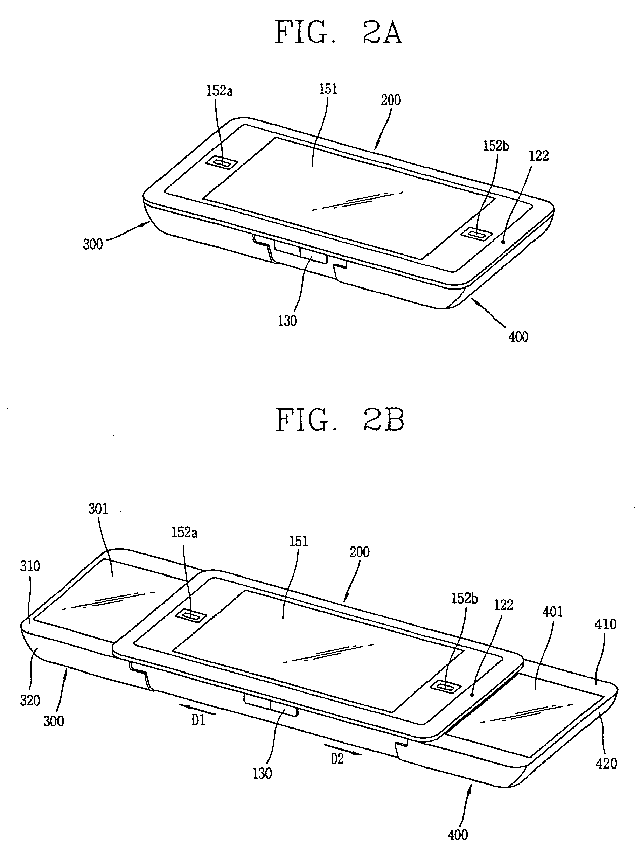

FIGS. 2A and 2B are front perspective views showing one illustrative embodiment of a mobile terminal or portable terminal. This terminal may include a main body 200, and a first slider 300 and a second slider 400 relatively slidably connected to the main body 200.

A state in which part of the first and the second sliders 300, 400 is covered by the main body 200 as illustrated in FIG. 2A may be referred to as a closed configuration.

The first slider 300 is configured to be slidably moved in a first direction (D1) in the closed configuration, and the second slider 400 is configured to be slidably moved in a second direction (D2) in the closed configuration. Here, the first and the second directions (D1, D2) may have opposite directions to each other.

When the first and the second sliders 300 are slidably moved in the first and the second directions (D1, D2) respectively in the closed configuration, a covered part of the first and the second sliders 300, 400 is exposed, and this state may be referred to as an open configuration.

The main body 200, the first slider 300, and the second slider 400 may include a case (casing, housing, cover, etc.) forming an appearance thereof. The cases may be formed by injection-molding a synthetic resin or may be also formed of a metal material such as stainless steel (STS), titanium (Ti), or the like.

A first display unit 151, a first and a second speakers 152a, 152b, a microphone 122, a user interface unit 130, and the like may be disposed in the main body.

. The first display unit 151 occupies most of a main surface of the main body 200. The first display unit 151 may further include a touch sensing unit to be implemented in the form of a touch screen.

The first speaker 152a is disposed in a region adjacent to an end of the first display unit 151, and the second speaker 152b and microphone 122 are disposed in a region adjacent to the other end thereof.

For the user interface unit 130, it is possible to employ any method such as a push key, a touch key, a scroll key if it is a tactile manner allowing the user to perform manipulation with a tactile feeling.

The first slider 300 may include a second display unit 301, and the second slider 400 may include a third display unit 401. The second and the third display units 301, 401 are mounted on a front surface of the first and the second sliders 300, 400, and they are covered by the main body 200 in a closed configuration and exposed to the outside in an open configuration. The second and the third display units 301, 401 may be also implemented in the form of a touch screen, similarly to the first display unit 151.

In this embodiment, the second and the third display units 301, 401 are disposed on an upper surface of the first and the second sliders 300, 400, but the first and the second sliders 300, 400 may have various configurations such as input and output of information, connection with external devices, and the like, in addition to the foregoing configuration. For example, a QWERTY type keypad, touch pad for inputting a touch operation, and the like may be mounted on a front surface of the first and the second sliders 300, 400.

Those configurations may illustratively be referred to as "user interfaces" as a concept of including the configurations for input and output of information, connection with external devices, and the like. In other words, the user interface is a concept including an A/V input unit 120, a user input unit 130, an output unit 150, and the like.

Differently from this embodiment, moreover, different kinds of configurations may be disposed for the first and the second sliders 300, 400. For example, a display unit may be disposed for the first slider 300, and a keypad may be also disposed for the second slider 400.

The mobile terminal is formed in a bar shape in a closed configuration, and operated primarily in a standby mode, a phone call mode, and the like in the closed configuration. Furthermore, the mobile terminal may be configured to input a message using the user interface in an open configuration or operate additional functions of the mobile terminal such as playing music or videos.

As for the configuration of the first slider 300, the first slider 300 may include a slide unit 310 and a cover unit 320.

The slide unit 310 is slidably mounted in the main body 200 to be pulled out of an inner portion of the main body 200. The second display unit 301 may be provided on a front surface of the slide unit 310.

The cover unit 320 is coupled to the slide unit 310, and formed to be slidably moved along a rear surface of the main body 200. The cover unit 320 may be formed to surround the rear and lateral surfaces of the main body.

The second slider 400 may also include a second slide unit 410 and a second cover unit 420, similarly to the first slider 300. In this embodiment, it is illustrated that the first and the second sliders 300, 400 are formed with the slide units 310, 410 and cover units 320, 420 respectively, but only either one of the first and the second sliders 300, 400 may be formed with the slide units 310, 410 and cover units 320, 420.

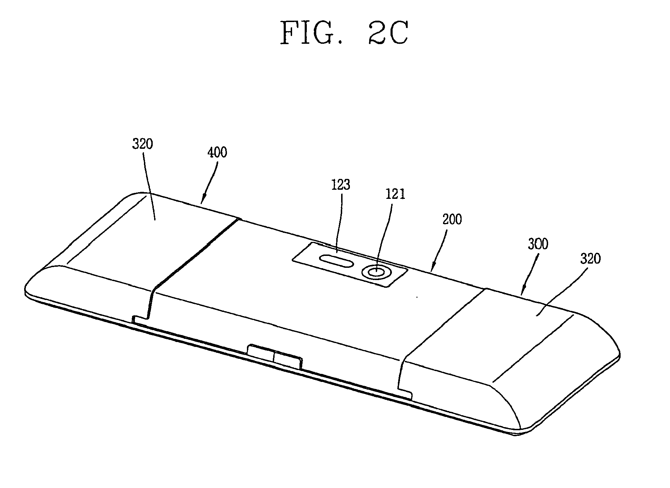

FIG. 2C is a rear perspective view of a mobile terminal illustrated in FIG. 2B. Referring to FIG. 2C, a camera 121 may be mounted on a rear surface of the main body 200. The camera 121 may be provided on a terminal body in a rotation or pop-up manner. Moreover, a plurality of cameras 121 may be disposed on a plurality of surfaces of the main body 200.

A flash 123 may be disposed adjacent to the camera 121. The flash 123 illuminates light toward an object when capturing the object with the camera 121.

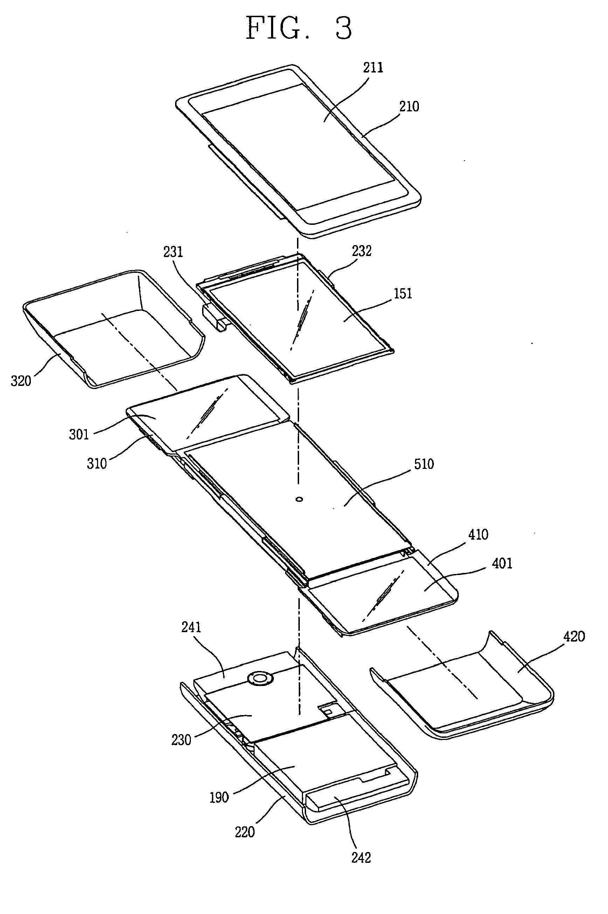

A power supply unit 190 (refer to FIG. 3) may be mounted on a rear surface of the main body 200. The power supply unit 190 may be configured in the form of a battery so as to be incorporated in the main body 200, or directly detachable from the outside of the main body 200.

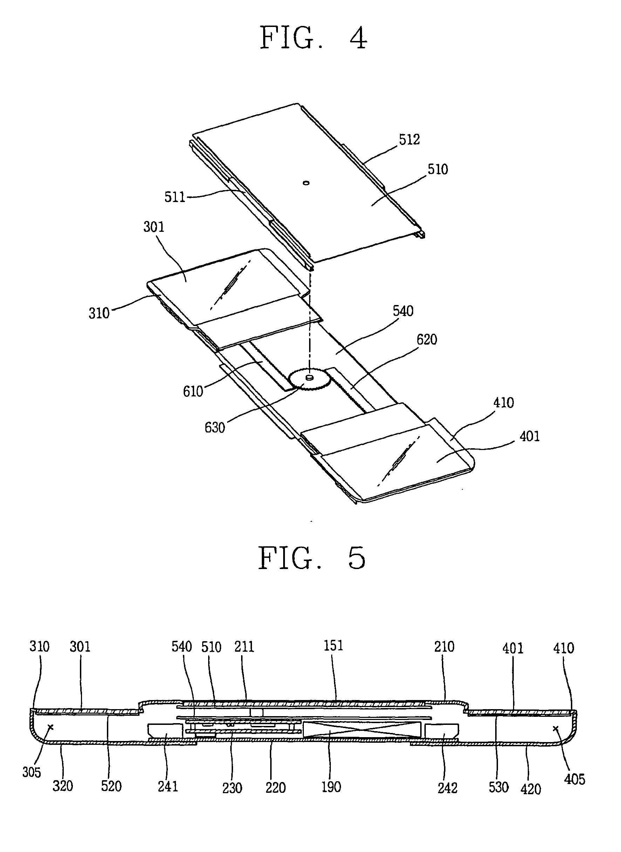

FIG. 3 is an exploded perspective view illustrating one possible arrangement of the mobile terminal, FIG. 4 shows another view of this terminal in a horizontal direction, and FIG. 5 shows a cross-sectional of this terminal taken in a vertical direction.

Referring to FIGS. 3 through 5, the main body 200 may include a front case 210 and a rear case 220 coupled to each other, the first and the second slide units 310, 410 are configured to be slidably moved within a space formed between the front case 210 and the rear case 220, and the first and the second cover units 320, 420 are configured to be slidably moved along a rear surface of the rear case 220.

The cover units 320, 420 are formed to surround a lateral surface of the main body 200, and accommodation spaces 305, 405 for accommodating part of the main body 200 are formed between the cover units 320, 420 and the slide units 310, 410.

According to the foregoing configuration, the first and the second sliders 300, 400 are formed in a C-shaped cross-section and disposed to be overlapped with a rear surface of the front case 210 and the rear case 220. Accordingly, it may be possible to implement a form factor capable of minimizing a step created between a front surface of the main body 200 and a front surface of the first and the second sliders 300, 400 in an open configuration as well as minimizing a step created between a rear surface of the main body 200 and a rear surface of first and second sliders 300, 400.

The foregoing shape and disposition of the main body 200 and the first and the second sliders 300, 400 minimizes a difference between the thickness of the main body 200 and the entire thickness of the mobile terminal 100, thereby reducing a step between the main body 200 and the first and the second sliders 300, 400.

A slide module for relatively slidably connecting between the main body 200 and the first and the second sliders 300, 400 may be mounted between them.

The slide module may include a first fixed plate 510 fixed to an inner portion of the main body 200, and a first and a second moving plates 520, 530 relatively slidably coupled to the first fixed plate 510.

The first display unit 151 may be mounted on a front surface of the first fixed plate 510, and time information outputted from the first display unit 151 is seen from the outside through a transparent window 211 mounted on the front case 210.

A slide rail 511 having a groove is provided in both ends of the 510, and the first and the second moving plates 520, 530 are slidably inserted into the slide rail 511. The first and the second moving plates 520, 530 are provided with a first and a second slide units 310, 410 respectively. When the first and the second moving plates 520, 530 are relatively moved in a first and a second directions (D1, D2) respectively in a state that they are disposed to be overlapped with the first fixed plate 510, the first and the second slide units 310, 410 are also moved in the first and a second directions (D1, D2) respectively to be exposed to the outside.

A second fixed plate 540 is fixed to a rear surface of the first fixed plate 510. A coupling unit 512 is formed at a position adjacent to the slide rail 511 of the first fixed plate 510, and a second fixed plate 540 is fixed to the coupling unit 512 using a method of welding, adhesion, or the like. The first fixed plate 510 and second fixed plate 540 are coupled to each other to form a predetermined space therebetween, and the first and the second moving plates 520, 530 slidably moves on a space formed between the first fixed plate 510 and second fixed plate 540.

At least one printed circuit board 230 is mounted in a space formed between the second fixed plate 540 and the rear case 220. According to this embodiment, a pair of substrates are disposed to be overlapped with each other so as to provide more electronic components in a restricted space.

A battery 190 is mounted at a side of the printed circuit board 230, and a first antenna 241 and a second antenna 242 are disposed at both ends of the rear case 220. Here, when either one of the first and the second antennas 241, 242 performs a function as a main antenna for voice or video phone call, and the like, the other one performs a function as a sub-antenna for Bluetooth, GPS, and the like.

The first and the second Exed plates 510, 540 may be preferably formed of a metal, and in this case, the first and the second fixed plates 510, 540 constitutes part of the main body 200, thereby enhancing the rigidity of the main body 200.

Moreover, the second fixed plate 540 performs a function of spatially separating a slide-moving space of the moving plates 510, 520 from a mounting space of the printed circuit board 230, the battery 190, the first and a second antennas 241, 242, and the like. In other words, the second fixed plate 540 partitions off a space between the second fixed plate 540, and the moving plates 520, 530 and the printed circuit board 230, and the like. Through such a structure, the mounting space of electronic components such as a printed circuit board 230 can be spatially and physically divided from the moving space of slide units 310, 410.

The display module 151 is connected to at least one of flexible circuit boards 231, 232, and the flexible circuit boards 231, 232 are connected to a main board 230 to electrically connect the display module 151 with the main board 230. According to this embodiment, the flexible circuit board 231 may include a first and a second flexible circuit boards 231, 232 extended from both ends of the display module 151.

The first and the second flexible circuit boards 231, 232 are disposed to be extended along both side ends of the first fixed plate 510, that is, outer sides of the portion on which the slide rail 511 is formed, and connected to the main board 230 through a rear side of the second fixed plate. Such a structure can spatially divide a mounting space of flexible circuit boards from a moving space of slide units. The structure and disposition of the fixed plates 510, 540 and moving plates 520, 530 separates a slide-moving space of the slide units 410, 420 from a disposition space of the electronic components and flexible circuit boards 231, 232, thereby preventing them from being interfered with each other.

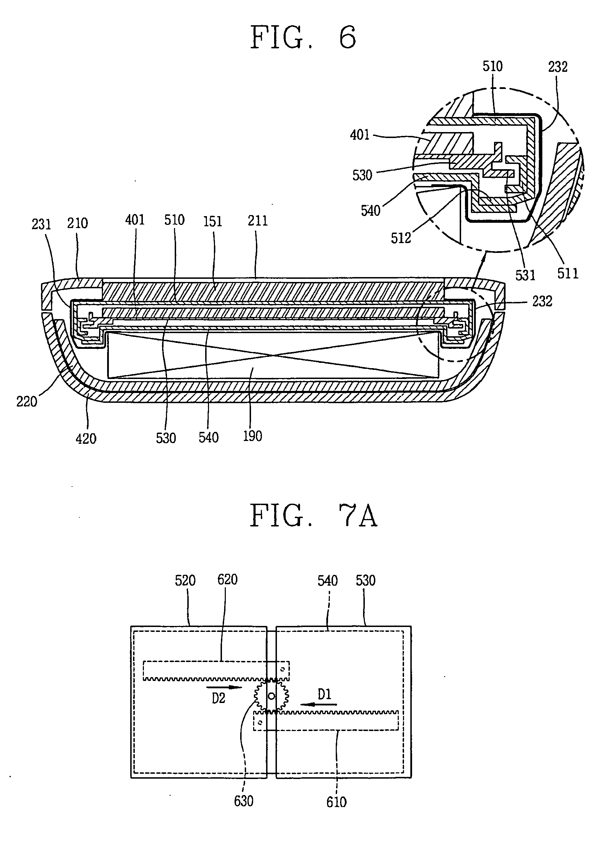

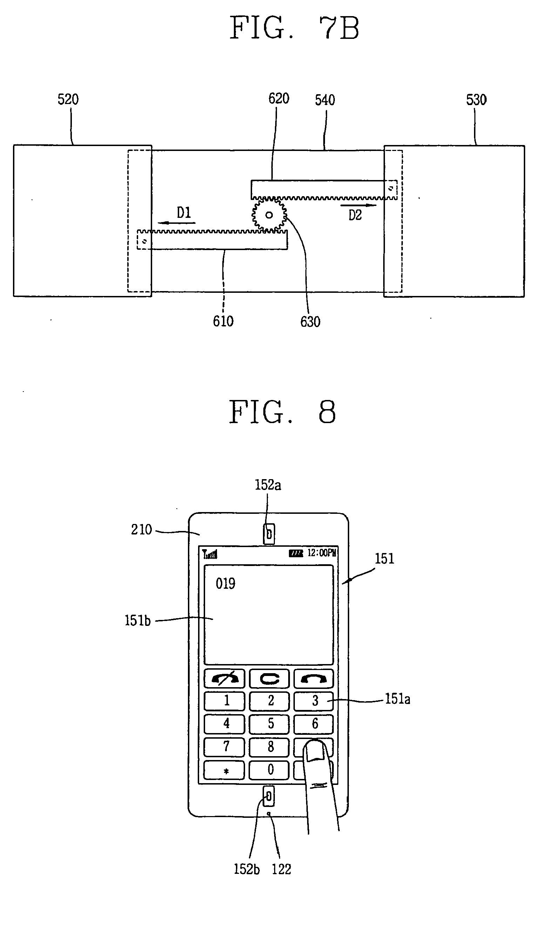

FIG. 6 is an exploded perspective view illustrating a slide module illustrated in FIG. 3, and FIGS. 7A and 7B are plan views illustrating the operating state of a slide module.

Referring to FIG. 6, a mobile terminal according to one embodiment may further include a drive unit for linking a first slider with a second slider.

The drive unit slidably moves the second slider 400 in a second direction (D2) as the first slider 300 is slid in a first direction (D1), and slidably moves the first slider 300 in a first direction (D1) when the second slider 400 is slid in a second direction (D2).

The drive unit may include a first moving unit fixed to the first slider 300, a second moving unit fired to the second slider 400, and a movement transmission unit converting a moving force of the first direction (D1) exerted by the first moving unit into a moving force of the second direction (D2) to transmit the converted moving force to the second moving unit.

According to this embodiment, the first and the second moving units are implemented in the form of a first and a second rack gears 610, 620 fixed to the first and the second moving plates 520, 530 respectively, and the movement transmission unit is implemented in the form of a pinion gear 630 rotatably mounted at the main body 200 and engaged with the first and the second rack gears 610, 620.

The first and the second rack gears 610, 620 have the first and the second directions (D1, D2) respectively in a length direction, and may have a form that is extended from an end of the first and the second moving plates 520, 530. The first and the second rack gears 610, 620 may be fixed to a rear surface of the first and the second moving plates 520, 530 respectively.

The pinion gear 630 is rotatably mounted on an upper surface of the second fixed plate 540. In other words, the first and the second rack gears 610, 620 and pinion gear 630 are positioned at a space formed between the first fixed plate 510 and the second fixed plate 540.

FIG. 7A is a plan view of a slide module illustrating an open configuration, and FIG. 7B is a plan view of a slide module illustrating a closed configuration.

If the first moving plate 520 is slidably moved in the first direction (D1) in the closed configuration, then the first rack gear 610 is also moved in the first direction (D1). Accordingly, the pinion gear 630 engaged with the rack gear 610 rotates in a clockwise direction of the drawing.

Based on the rotation of the pinion gear 630, the second rack gear 620 engaged with the pinion gear 630 is moved in the second direction (D2). In this manner, the pinion gear 630 converts a moving force of the first direction (D1) exerted by the first rack gear 610 into a moving force of the second direction (D2) to transmit the converted moving force to the second rack gear 620.

As the second rack gear 620 is moved in the second direction (D2), the second moving plate 530 is also moved in the second direction (D2), and the mobile terminal is thereby switched into an open configuration.

On the other hand, if the first moving plate 520 and the first rack gear 610 are slidably moved in the second direction (D2) in an open configuration, then the pinion gear 630 rotates in a counterclockwise direction of the drawing. Accordingly, the second rack gear 620 engaged with the pinion gear 630, and the second moving plate 530 engaged with the second rack gear 620 are moved in the first direction (D1) and thereby switched into a closed configuration.

According to the structure and operation of the foregoing slide module, as the first slider 300 is moved in the first direction (D1) in a closed configuration, the second slider 400 is moved in the second direction (D2) and thereby switched into an open configuration, and as the first slider 300 is moved in the second direction (D2) in an open configuration, the second slider 400 is moved in the first direction (D1) and thereby switched into a closed configuration.

One or more embodiments have been described herein on the basis that when moving the first slider 300 the second slider 400 is moved in link with the movement of the first slider 300, and on the contrary, in case of moving the second slider 400 the first slider 300 will be slidably moved in link with the movement of the second slider 400. In other words, as the second slider 400 is moved in the second direction (D2) the first slider 300 will be moved in the first direction (D1), and when the second slider 400 is moved in the first direction (D1) the first slider 300 will be moved in the second direction (D2).

FIG. 8 is a view illustrating the operating state in a closed configuration of a mobile terminal. As illustrated in FIG. 8, a mobile terminal according to one embodiment is formed in a bar shape in a closed configuration, and operated primarily in a standby mode, a phone call mode, and the like in the closed configuration.

In case of implementing the first display unit 151 with a touch screen, visual information for a touch input may be displayed on the display unit 151. For the input of visual information, at least one of characters, numerals, symbols, graphics, or icons may be displayed with a predetermined arrangement so as to be implemented in a form of keypad, and such a keypad may be referred to as a so-called "soft key."

FIG. 8 illustrates an example in which soft keys 151a for inputting phone numbers are displayed. An output window 151b is displayed at an upper portion of the display unit 151, and soft keys 151a are displayed at a lower portion of the output window 151b. When soft keys 151c are touched, numerals or the like corresponding to the touched soft key are displayed on the output window 151b. When a call button is touched, a call connection for the phone number displayed on the output window 151a will be attempted.

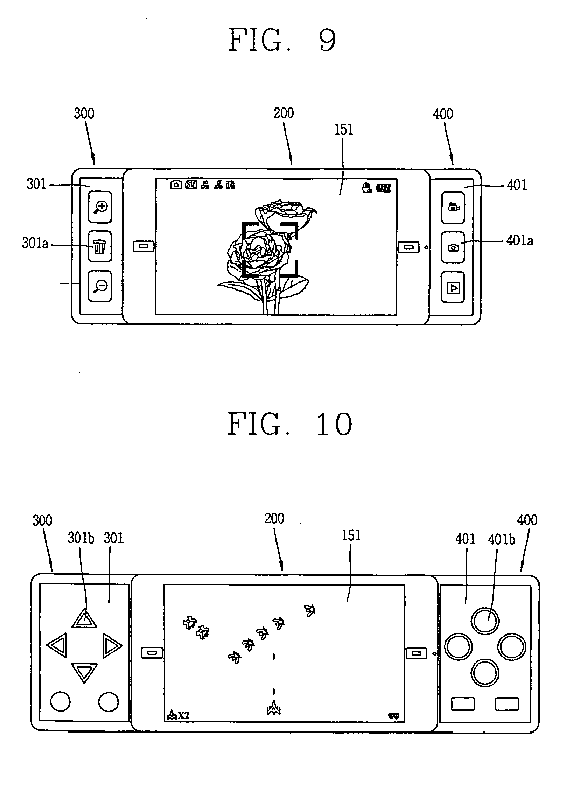

FIGS. 9 through 12 are views illustrating various operating states in an open configuration of a mobile terminal. A mobile terminal may be configured to operate supplementary functions thereof such as inputting messages, playing music or video files or the like using the user interfaces in an open configuration. FIG. 9 illustrates a case in which a mobile terminal is vertically disposed (portrait), and FIGS. 10 through 12 illustrate a case in which a mobile terminal is horizontally disposed (landscape). The first display unit display module 151 may be configured to switch an output direction of the output screen based on the disposition direction of a mobile terminal.

On the other hand, the first and the second sliders 300, 400 move in stages from a first open configuration to a second open configuration. Here, the first open configuration is referred to as a state in which part of an entire region of the first and the second display units is exposed, and the second open configuration is referred to as a state in which an entire region of the first and the second display units is exposed. FIG. 9 illustrates a first open configuration of the mobile terminal, and FIGS. 10 through 12 illustrate a second open configuration of the mobile terminal.

In this case, the second and the third display units 301, 401 may be configured to output screens corresponding to the exposed area in the first and the second open configurations respectively.

In this embodiment, it is illustrated a case that a mobile terminal is switched in stages from a closed configuration to two kinds of open configurations, but it may be also possible to have a case of switching in stages to more than two kinds of open configurations.

A mobile terminal may be set to implement a preset mode in each open configuration. For example, a camera mode may be automatically implemented (refer to FIG. 9) when the mobile terminal is switched from a closed configuration to a first open configuration, and a game mode, a web browsing mode, or a video/music play mode may be automatically implemented (refer to FIGS. 10 through 12) when switching to a second open configuration.

FIG. 9 illustrates a state in which a camera mode is implemented in a first open configuration. In this case, an object inputted through a camera 121 is displayed on the first display unit 151. Furthermore, in case of implementing the second and the third display units 301, 401 in the form of a touch screen, soft keys 301a, 401a for inputting a command related to camera functions may be outputted on the second and the third display units 301, 401.

FIGS. 10 through 12 illustrate the states of implementing a game mode, a web browsing mode, or a video play mode respectively. In this case, information related to those functions may be outputted, and soft keys for inputting a control command may be displayed on the second and the third display units 301, 401.

When a game execution screen is outputted on the first display unit 151 as illustrated in FIG. 10, game manipulation keys 301b, 401b may be displayed on the second and the third display units 301, 401.

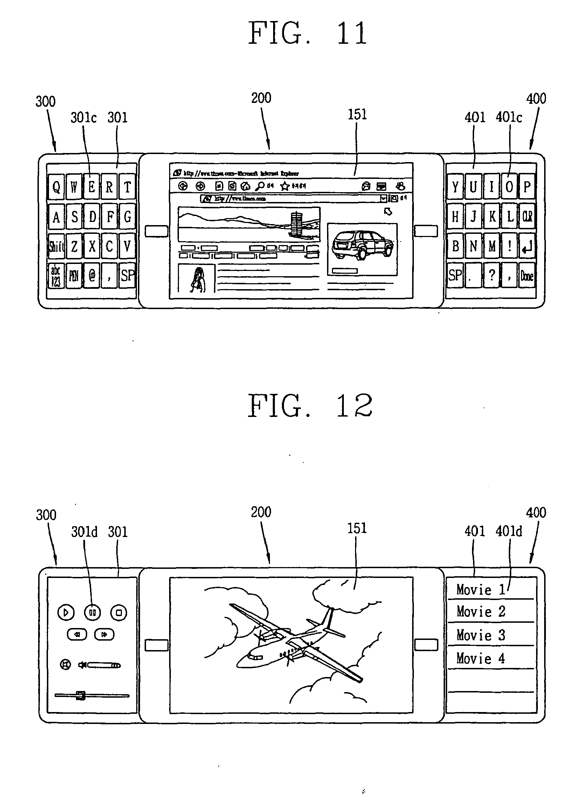

Furthermore, when a web browsing screen is outputted on the first display unit 151 as illustrated in FIG. 11, qwerty keys 301c, 401c may be displayed on the second and the third display units 301, 401.

Moreover, when a video is outputted on the first display unit 151 as illustrated in FIG. 12, manipulation keys 301d related to the control of reproducing a video (for example, play, stop, suspend, etc.) may be displayed on the second display unit 301, and a video list 401d stored in the mobile terminal may be displayed on the third display unit 401.

In this manner, it may be configured such that information related to the output content of the first display unit 151 is displayed on the second and the third display units 301, 401, and therefore, it may not be required to display the foregoing information on the first display unit 151, thereby maximizing the size of the first display unit 151. In addition, according to one embodiment, based on the kind of operation mode, the corresponding information may be displayed on the second and the third display units 301, 401, thereby implementing more convenient multimedia environments.

In accordance with one or more embodiments described above, the movement of the first slider is dependent upon movement of the second slider by virtue of the pinion gear. However, in an alternative embodiment, the first and second sliders may move in independently from one another, for example, by virtue of supplying a separate gear for each slider.

As described above, one or more embodiments of the mobile terminal provide a structure capable of implementing convenient multimedia environments by mounting user interfaces on sliders that slidably move in a first and a second directions respectively on the main body. The embodiments described herein, thus, provide a new form factor capable of implementing more convenient multimedia environments by expanding a mounting space of the user interface unit as well as to provide a structure favorable for the slimness of a mobile terminal.

Furthermore, sliders may be configured with a slide unit and a cover unit, and a step created between the slider and the main body can be minimized in an open configuration, thereby implementing a slimmer structure of the mobile terminal.

In accordance with one embodiment, a mobile terminal includes a main body having a display unit on a front surface thereof; and a first and a second sliders having a first and a second user interfaces respectively covered by the main body in a closed configuration, and slidably moving in a first and a second directions respectively in the closed configuration to implement an open configuration in which the first and the second user interfaces are exposed. At least one of the first and the second sliders comprises a slide unit slidably mounted on the main body to be pulled out of an inner portion of the main body; and a cover unit coupled to the slide unit, and formed to be slidably moved along a rear surface of the main body.

The slide unit may comprise a first and a second slide units to be pulled out in the first and the second directions from an end and the other end of the main body respectively, and the cover unit comprises a first and a second cover units coupled to a rear side of the first and the second slide units respectively.

The first and the second user interfaces may be mounted on a front surface of the first and the second slide units respectively, and the cover unit may be formed to surround a lateral surface of the main body, and an accommodation space for accommodating part of the main body is formed between the cover unit and the slide unit.

The terminal may also include a slide module slidably connecting the main body to the slide unit, wherein the slide module comprises, a first fixed plate fixed to an inner portion of the main body, and provided with slide rails at both sides thereof; and a first and a second moving plates having the slide unit, and slidably inserted into the slide rails. A printed circuit board may be mounted at a rear side of the first and the second moving plates, the first fixed plate may be coupled to a second fixed plate for partitioning a space between the moving plate and the printed circuit board, and a flexible circuit board may extend along a side end of the first fixed plate from the display module and connected to the printed circuit board.

In addition, a drive unit may slide the second slider in a second direction as the first slider is slid in a first direction. The drive unit may include first and second moving units fixed to the first and the second sliders respectively, and moved together with the first and the second sliders; and a movement transmission unit provided in the main body to convert a moving force of the first direction exerted by the first moving unit into a moving force of the second direction, thereby transmitting the converted moving force to the second moving unit.

The first and second moving units may include first and second rack gears having the first and the second directions respectively in a length direction, and the movement transmission unit is a pinion gear rotatably mounted at an inner portion of the main body and engaged with the first and the second rack gears. The first and the second user interfaces may be implemented in the form of a touch screen for displaying information that can be inputted by a touch.

The first and the second sliders may move in stages from a first open configuration in which part of an entire region of the first and the second user interfaces is exposed, to a second open configuration in which an entire region of the first and the second user interfaces is exposed. The first and the second user interfaces are configured to output visual information, thereby outputting screens having a size corresponding to the exposed area in the first and the second open configurations respectively.

In accordance with another embodiment, a mobile terminal includes a main body having a display unit; a first and a second sliders having a first and a second user interfaces respectively covered by the main body in a closed configuration, and slidably moving in a first and a second directions respectively in the closed configuration to implement an open configuration in which the first and the second user interfaces are exposed; and a drive unit mounted between the first and the second sliders to slide the second slider in a second direction as the first slider is slid in a first direction.

The drive unit may include first and second moving units fixed to the first and the second sliders respectively, and moved together with the first and the second sliders; and a movement transmission unit provided in the main body to convert a moving force of the first direction exerted by the first moving unit into a moving force of the second direction, thereby transmitting the converted moving force to the second moving unit.

The first and the second moving units may include first and second rack gears having the first and the second directions respectively in a length direction, and the movement transmission unit is a pinion gear rotatably mounted at an inner portion of the main body and engaged with the first and the second rack gears.

In addition, the mobile terminal may include a first fixed plate fixed to an inner portion of the main body; a second fixed plate coupled to a rear side of the first fixed plate; and a first and a second moving plates having the first and the second sliders respectively, and slidably coupled to the first faxed plate between the first and the second fixed plates, wherein the first and the second rack gears are fixed to a rear surface of the first and the second moving plates respectively, and the pinion gear is rotatably mounted on an upper surface of the second fixed plate.

In accordance with another embodiment, a mobile terminal, comprising a main body having a first display and first and second sliders coupled to the main body, wherein the first and second sliders have first and second user interfaces, wherein the first user interface at least partially covered by the main body when the first slider is in a first position and exposed to view when the first slider is in a second position, and wherein the second user interface at least partially covered by the main body when the second slider is in the first position and exposed to view when the first slider is in the second position.

The first user interface may be completely covered by the main body when the first slider is in the first position, and the second user interface may be completely covered by the main body when the second slider is in the first position. In addition, the first and second sliders may be mounted on opposing sides of the main body.

In addition, movement of the first slider is dependent on movement of the second slider, so that moving the second slider from the first position to the second position causes the first slider to move from the first position to the second position.

In addition, performing an operation using at least one of the first or second user interfaces may cause a corresponding function to be performed using the first display of the main body. The first user interface may include a second display and the second user interface may include a third display, and at least one of the second display or third display may include a touch screen for causing a function to be performed on the first display of the main body. The first display, second display, and third display face in a same direction, or at least one of these displays may face in a different direction in an alternative embodiment.

In accordance with another embodiment, a mobile terminal includes a main body having a first display; first and second sliders coupled to opposing sides of the main body, the first and second sliders moving respective first and second user interfaces in opposing directions when sliding from a first position to a second position, and a driver to cause first and second sliders to move in said opposing directions, wherein the driver is coupled to the first and second sliders so that movement of the first slider is dependent on movement of the second slider.

The first and second user interfaces may be at least partially covered by the main body when the first and second sliders are in the first position, and may be exposed to view when the first and second sliders are in the second position. The first user interface may include a second display and the second user interface may include a third display.

In addition, at least one of the second display or the third display may include a touch screen, and performing an operation using the touch screen may cause a corresponding function to be performed on the first display of the main body.

The driver may include a gear which causes the first and second sliders to move in unison in said opposing directions when the gear wheel rotates. Rotation of the gear in a first direction causes the first and second sliders to move from the first position to the second position, and rotation of the gear in a second direction causes the first and second sliders to move from the second position to the first position.

The one or more embodiments of the mobile terminal disclosed herein may include or be implemented as any one of a variety of electronic terminals, including but not limited to a portable phone, a smart phone, a laptop computer, a digital broadcast terminal, a personal digital assistant (PDA), a portable multimedia player (PMP), a navigation, and the like. Alternatively, the embodiments disclosed herein may be applicable to stationary terminals such as digital TV, desktop computer, and the like, as well as mobile terminals.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. Also, it is understood that all or part of each embodiment may be selectively combined with one or more features of the other embodiments to make various modifications thereto.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal, comprising:
a main body (200) having a first display (151); and
first and second sliders (300, 400) coupled to the main body, wherein:
the first and second sliders have first and second user interfaces;
the first user interface is at least partially covered by the main body (200) when the first slider (300) is in a first position and exposed to view when the first slider (300) is in a second position, and
the second user interface is at least partially covered by the main body (200) when the second slider (400) is in the first position and exposed to view when the first slider (300) is in the second position.

2. The mobile terminal of claim 1, wherein the first user interface is completely covered by the main body (200) when the first slider (300) is in the first position.

3. The mobile terminal of claim 2, wherein the second user interface is completely covered by the main body (200) when the second slider (400) is in the first position.

4. The mobile terminal of any one of claims 1 to 3, wherein the first and second sliders (300, 400) are mounted on opposing sides of the main body.

5. The mobile terminal of any one of claims 1 to 4, wherein movement of the first slider (300) is dependent on movement of the second slider (400).

6. The mobile terminal of claim 5, wherein moving the second slider from the first position to the second position causes the first slider to move from the first position to the second position.

7. The mobile terminal of any one of claims 1 to 6, wherein performing an operation using at least one of the first or second user interfaces causes a corresponding function to be performed using the first display of the main body.

8. The mobile terminal of claim 7, wherein the first user interface includes a second display (301) and the second user interface includes a third display (401).

9. The mobile terminal of claim 8, wherein at least one of the second display (301) or third display (401) includes a touch screen for causing a function to be performed on the first display (151) of the main body.

10. The mobile terminal of claim 1, wherein at least one of the first or second sliders comprises:
a slide unit slidably mounted on the main body to be pulled out of an inner portion of the main body from the first position to the second position ; and
a cover coupled to the slide unit and formed to be slidably moved along a rear surface of the main body.

11. The mobile terminal of claim 10, wherein the slide unit comprises a first and a second slide units (310, 410) to be pulled out in the first and the second directions from an end and the other end of the main body respectively, and the cover unit comprises a first and a second cover units (320, 420) coupled to a rear side of the first and the second slide units respectively.

12. The mobile terminal of claim 10, further comprising:
a slide module slidably coupling the main body to a slide unit,
wherein the slide module comprises:
a first fixed plate (510) fixed to an inner portion of the main body and provided with slide rails at both sides thereof; and
a first and a second moving plates (520, 530) having the slide unit and slidably inserted into the slide rails.

13. The mobile terminal of claim 1, further comprising:
a driver to slide cause the second slider to move in a second direction as the first slider moves in an opposing first direction.

14. The mobile terminal of claim 13, wherein the driver comprises:
first and second movers which are fixed to the first and second sliders respectively and which move together with the first and the second sliders; and
a movement translator, coupled to the main body, to convert a moving force applied in the first direction by the first mover into a moving force applied by the second mover in the second direction.

15. The mobile terminal of claim 14, wherein:
the first and the second movers include or are coupled to first and second rack gears (610, 620), and
the movement translator includes or is coupled to a pinion gear (630) rotatably mounted to the main body at a position to be commonly engaged with the first and second rack gears.
